# EUROPEAN PATENT SPECIFICATION

(11) **EP 3 211 709 B1**
(45) Date of publication and mention of the grant of the patent: **11.09.2019**
(21) Application number: 17157677.0
(22) Date of filing: 23.02.2017
(51) Int. Cl.: H01M 10/44, H01M 4/587, H01M 10/0525, H02J 7/00, H01M 4/505, H01M 4/525, H01M 4/58

(54) **METHOD FOR CHARGING A LITHIUM ION BATTERY**
VERFAHREN ZUM AUFLADEN EINER LITHIUM-IONEN-BATTERIE
PROCÉDÉ DE CHARGEMENT DE BATTERIE AU LITHIUM-ION

(30) Priority: 23.02.2016 CN 201610099461
(43) Date of publication of application: 30.08.2017
(73) Proprietor: Dongguan Amperex Technology Limited, North Zone of SSL Sci. & Tech. Industry Park Dongguan city, Guangdong 523808 (CN); Ningde Amperex Technology Limited, Ningde, Fujian 352100 (CN)
(72) Inventor: LUO, Fu ping, JiaoCheng District, NingDe City Fujian Province, P.R. 352100 (CN); WANG, Sheng wei, JiaoCheng District, NingDe City Fujian Province, P.R. 352100 (CN); GAO, Chao, JiaoCheng District, NingDe City Fujian Province, P.R. 352100 (CN); ZHENG, Qiang, JiaoCheng District, NingDe City Fujian Province, P.R. 352100 (CN)
(74) Representative: Greaves Brewster LLP

(56) References cited:
- WO-A1-2014/184338
- JP-A- H07 105 983
- JP-B2- 3 239 040
- KR-A- 20120 121 828
- US-A1- 2014 327 406

## Description

### FIELD OF THE INVENTION

The present invention generally relates to lithium ion batteries and, more particularly, relates to method for charging a lithium ion battery which can inhibit lithium precipitation at the anode and improve the safety performance and cycle life of the lithium ion battery.

### BACKGROUND OF THE INVENTION

After 20 years of development, energy density of a lithium ion battery has been significantly improved. At present, the energy density of a lithium ion battery has been developed to a bottleneck stage. Increasing the charging speed of a lithium ion battery with limited energy density can enhance user's experience. Therefore, lithium ion battery having high energy density which can be charged quickly will stand out in the future competition.

In charging process of a lithium ion battery, lithium precipitation only occurs at the anode when the anode potential is reduced to a certain over potential for a certain period of time. This potential is the lowest anode potential of at which no lithium precipitation at the anode, usually expressed by η. The existing method for charging a lithium ion battery usually includes charging the lithium ion battery at a constant current to a potential and then charging the lithium ion battery at a constant voltage at this potential. The existing method for charging a lithium ion battery may lead to increase of the cathode potential of the lithium ion battery and reduce of the anode potential of the lithium ion battery. When the anode potential is below 0V, the lithium ion will be reduced to lithium via precipitation at the surface of the anode. Especially in low temperature conditions, due to the decline of ion and electronic conductivity of the lithium ion battery, the charging process will cause increased polarization. A continuous charging will make the polarization more obvious and increase the possibility of lithium precipitation. The precipitation of lithium dendrite will be accumulated in the electrode surface, which threatens to the safety performance of lithium ion battery seriously.

For a lithium ion battery, the safe charging region is certain, i.e. there is a maximum rate at which no lithium precipitation occurs at the anode. When the charging rate is higher than the maximum rate, lithium precipitation occurs at the anode, thereby affecting the safety performance and service life of lithium ion battery. In order to improve charging speed of the lithium ion battery, charging method can be optimized to inhibit lithium precipitation at the at high large rate, thereby expanding its safe charging range and improving the maximum charging rate of the anode at which no lithium precipitation occurs.

In view of the foregoing, what is needed, therefore, is to provide a method for charging a lithium ion battery which can inhibit lithium precipitation at the anode, so as to improve safe charging rate, safety performance and cycle life of the lithium ion battery.

KR20120121828A discloses a rapid charger of a pulse type battery having an energy recovery function in which rapid charging performance is improved by continuously applying high voltage.

JP3239040B discloses a charging method for a secondary battery, which realizes quick charging without operating a protective circuit. The method performs pulse discharging such that the battery voltage does not exceed a protective voltage for longer than a set time after performing pulse charging for a time shorter than the set time, temporarily stopping the charge/discharge operation in order to detect the voltage and stopping the charging operation when the detected voltage reaches a full-charge voltage.

### SUMMARY OF THE INVENTION

One object of the present invention is to provide a method for charging a lithium ion battery which can inhibit lithium precipitation at the anode, so as to improve safe charging rate, safety performance and cycle life of the lithium ion battery.

According to one embodiment of the present invention, a method for charging a lithium ion battery, including the steps of:
1) determining a maximum charging current I₀ and a lowest anode potential η of the lithium ion battery at which no lithium precipitation occurs;
2) charging the lithium ion battery at a constant current of I₁ which is greater than I₀ for a charging time of t₁;
3) discharging the lithium ion battery at a constant current of I₂ which is less than I₀ for a discharging time of t₂, wherein 5≤t₁/t₂≤50;
4) repeating steps 2) and 3) until a cutoff voltage of the lithium ion battery reaches V₀, and then standing the lithium ion battery for a standing time of t₃; and
5) charging the lithium ion battery with a constant current of I₀ until the cutoff voltage of the lithium ion battery reaches V₀ and then charging the lithium ion battery to a cutoff current of I₃ at a constant voltage.

According to one aspect of the present invention, in step 2), a current value of the constant current I₁ is 0.7C to 3C and the charging time t₁ is 0.1s to 20s.

According to one aspect of the present invention, in step 3), a current value of the constant current I₂ is 0 to 0.2C and the discharging time t₂ is 0.01s to 2s.

According to one aspect of the present invention, in step 4), the standing time t₃ is 1s to 10s.

According to one aspect of the present invention, in step 5), a current value of the constant current I₃ is 0.01C to 0.1C.

According to one aspect of the present invention, the cutoff voltage V₀ satisfies 3.6V≤V₀< 4.5V.

According to one aspect of the present invention, a cathode of the lithium ion battery is selected from a group consisting of LiCoO₂, LiFePO₄, LiNiCoMnₓAl₁₋ₓO₂ (0≤x≤1, hereinafter referred to as NCX (X=Mn, Al)); an anode of the lithium ion battery is selected from a group consisting of graphite, hard carbon, mesophase carbon microbeads; a maximum charge current I₀ of the anode at which no lithium precipitation occurs at the anode is 0.5C to 2.0C; and a lowest anode potential η at which no lithium precipitation occurs at the anode is -5mV to -100mV.

According to one aspect of the present invention, the method is carried out at a temperature of 25±3 °C.

Compared with the prior art, the method for charging a lithium ion battery of the present invention has the following advantages: the lithium ion battery is charged with a wide large current pulse and then discharged with a narrow small current pulse. The time in which the battery is below the lowest anode potential η when charged with high current is remarkably shortened. Increase of lithium ion concentration at the surface of the anode caused by the large current is reduced. Time in which the anode is at low potential is reduced, so as to avoid the safe problem caused by lithium precipitation at the anode.

Other advantages and novel features will be drawn from the following detailed description of preferred embodiments with the attached drawings. The accompanying drawings, which are incorporated in and constitute a part of this specification, illustrate embodiments of the present invention and, together with a general description of the invention given above, and the detailed description of the embodiments given below, serve to explain the principles of the invention.

### BRIEF DESCRIPTION OF THE DRAWINGS

Fig. 1 depicts a schematic diagram of a charging scheme according to a method for charging a lithium ion battery of the present invention;
Fig. 2 depicts a schematic diagram of voltage and anode potential of a full battery in example 1 of the present invention having LiCoO₂ and graphite and charged at 1.3C;
Fig. 3 depicts a schematic diagram of a charging process of example 1 of the present invention;
Fig. 4 depicts a schematic diagram of a charging process of comparative example 1;
Fig. 5 depicts an anodic potential curve of example 1 at the time of charging; and
Fig. 6 depicts an anodic potential curve of comparative example 2 at the time of charging.

### DETAILED DESCRIPTION OF THE INVENTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

The lithium ion batteries of Examples 1 to 7 and Comparative examples 1 to 2 each has a cathode of LiCoO₂ and an anode of graphite. Each lithium ion battery also includes a separator, an electrolyte and a packaging case. Each lithium ion battery is prepared by assembling, forming and aging process. The cathode includes 96.7% of LiCoO₂ (as a cathode active material), 1.7% of PVDF (as a binder), and 1.6% of SP (as a conductive agent). The anode includes 98% of artificial graphite (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 3400mAh (0.2C) and the cutoff voltage V₀ is 4.4V. At 25°C, the maximum charge current of the anode at which no lithium precipitation occurs is 1.3C and the lowest anode potential of the anode at which no lithium precipitation occurs is -70mV.

### Example 1

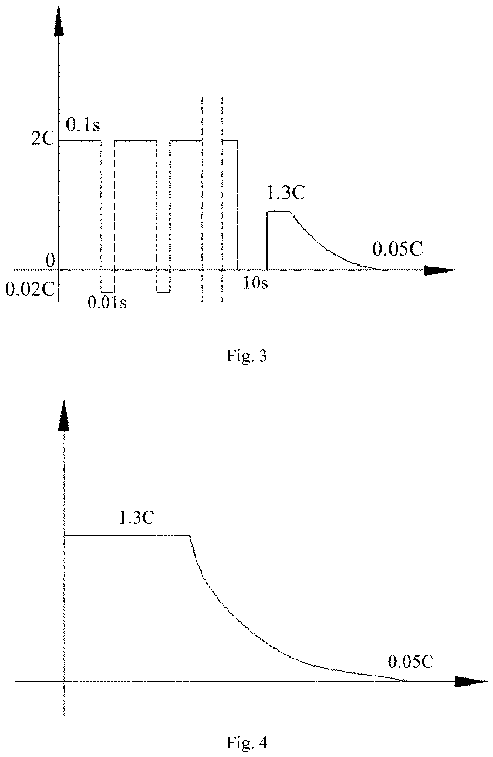

A lithium ion battery is charged at 25 °C according to the method for charging a lithium ion battery of the present invention. As shown in Fig. 3, the method for charging a lithium ion battery including the steps of:
1) charging the lithium ion battery at a constant current of 2C for 0.1s;
2) discharging the lithium ion battery at a constant current of 0.02C for 0.01s;
3) repeating steps 1) and 2) until a cutoff voltage of the lithium ion battery reaches 4.4V and then standing the lithium ion battery for 10s; and
4) charging the lithium ion battery at a constant current of 1.3C until the cutoff voltage reaches 4.4V and then charging the lithium ion battery at a constant voltage until a cutoff current of 0.05C is reached.

### Example 2

A lithium ion battery is charged at 25 °C according to the method for charging a lithium ion battery of the present invention. The method for charging a lithium ion battery including the steps of:
1) charging the lithium ion battery at a constant current of 1.5C for 10s;
2) discharging the lithium ion battery at a constant current of 0.1C for 0.2s;
3) repeating steps 1) and 2) until a cutoff voltage of the lithium ion battery reaches 4.4V and then standing the lithium ion battery for 10s; and
4) charging the lithium ion battery at a constant current of 1.3C until the cutoff voltage reaches 4.4V and then charging the lithium ion battery at a constant voltage until a cutoff current of 0.05C is reached.

### Example 3

A lithium ion battery is charged at 25 °C according to the method for charging a lithium ion battery of the present invention. The method for charging a lithium ion battery including the steps of:
1) charging the lithium ion battery at a constant current of 1.5C for 2s;
2) discharging the lithium ion battery at a constant current of 0.2C for 0.05s;
3) repeating steps 1) and 2) until a cutoff voltage of the lithium ion battery reaches 4.4V and then standing the lithium ion battery for 10s; and
4) charging the lithium ion battery at a constant current of 1.3C until the cutoff voltage reaches 4.4V and then charging the lithium ion battery at a constant voltage until a cutoff current of 0.05C is reached.

### Example 4

A lithium ion battery is charged at 25 °C according to the method for charging a lithium ion battery of the present invention. The method for charging a lithium ion battery including the steps of:
1) charging the lithium ion battery at a constant current of 1.5C for 20s;
2) discharging the lithium ion battery at a constant current of 0.1C for 2s;
3) repeating steps 1) and 2) until a cutoff voltage of the lithium ion battery reaches 4.4V and then standing the lithium ion battery for 10s; and
4) charging the lithium ion battery at a constant current of 1.3C until the cutoff voltage reaches 4.4V and then charging the lithium ion battery at a constant voltage until a cutoff current of 0.05C is reached.

### Example 5

A lithium ion battery is charged at 25 °C according to the method for charging a lithium ion battery of the present invention. The method for charging a lithium ion battery including the steps of:
1) charging the lithium ion battery at a constant current of 2C for 1s;
2) discharging the lithium ion battery at a constant current of 0.01C for 0.1s;
3) repeating steps 1) and 2) until a cutoff voltage of the lithium ion battery reaches 4.4V and then standing the lithium ion battery for 10s; and
4) charging the lithium ion battery at a constant current of 1.3C until the cutoff voltage reaches 4.4V and then charging the lithium ion battery at a constant voltage to a cutoff current of 0.01C.

### Example 6

A lithium ion battery is charged at 25 °C according to the method for charging a lithium ion battery of the present invention. The method for charging a lithium ion battery including the steps of:
1) charging the lithium ion battery at a constant current of 2C for 5s;
2) discharging the lithium ion battery at a constant current of I₂=0 for 1s;
3) repeating steps 1) and 2) until a cutoff voltage of the lithium ion battery reaches 4.4V and then standing the lithium ion battery for 1s; and
4) charging the lithium ion battery at a constant current of 1.3C until the cutoff voltage reaches 4.4V and then charging the lithium ion battery at a constant voltage to a cutoff current of 0.1C.

### Example 7

A lithium ion battery is charged at 25 °C according to the method for charging a lithium ion battery of the present invention. The method for charging a lithium ion battery including the steps of:
1) charging the lithium ion battery at a constant current of 2C for 3s;
2) discharging the lithium ion battery at a constant current of 0.1C for 0.5s;
3) repeating steps 1) and 2) until a cutoff voltage of the lithium ion battery reaches 4.4V and then standing the lithium ion battery for 30s; and
4) charging the lithium ion battery at a constant current of 1.3C until the cutoff voltage reaches 4.4V and then charging the lithium ion battery at a constant voltage to a cutoff current of 0.05C.

### Comparative example 1

A lithium ion battery is charged at 25 °C according to a conventional method for charging a lithium ion battery. As shown in Fig. 4, the conventional method for charging a lithium ion battery including the steps of:
1) charging the lithium ion battery at a constant current of 1.3C until a cutoff voltage of 4.4V; and
2) charging the lithium ion battery at a constant voltage until a cutoff current of 0.05C.

### Comparative example 2

A lithium ion battery is charged at 25 °C according to a conventional method for charging a lithium ion battery. The conventional method for charging a lithium ion battery including the steps of:
1) charging the lithium ion battery at a constant current of 1.8C until a cutoff voltage of 4.4V; and
2) charging the lithium ion battery at a constant voltage until a cutoff current of 0.05C.

Table 1 presents comparison of charging parameters, lithium precipitation and charging time of lithium ion batteries including LiCoO₂ and graphite in Examples 1 to 7 and comparative Examples 1 to 2.

**Table 1 Comparison of charging parameters and charging effects of lithium ion batteries including LiCoO₂ and graphite in Examples and Comparative examples**

| | **I₁** | **t₁(s)** | **I₂** | **t₂ (s)** | **I₀** | **t₃ (s)** | **I₃** | **Whether lithium precipitation occurs at the anode** | **Charging time for reaching 80% SOC (min)** |
|---|---|---|---|---|---|---|---|---|---|
| Comparative example 1 | / | / | / | / | 1.3C | / | 0.05C | No | 37.8 |
| Comparative example 2 | / | / | / | / | 1.8C | / | 0.05C | Yes | 32.7 |
| Example 1 | 2C | 0.1 | 0.02C | 0.01 | 1.3C | 10 | 0.05C | No | 32.5 |
| Example 2 | 1.5C | 10 | 0.1C | 0.2 | 1.3C | 10 | 0.05C | No | 34.2 |
| Example 3 | 1.5C | 2 | 0.2C | 0.05 | 1.3C | 10 | 0.05C | No | 33.9 |
| Example 4 | 1.5C | 20 | 0.1C | 2 | 1.3C | 10 | 0.05C | No | 34.8 |
| Example 5 | 2C | 1 | 0.01C | 0.1 | 1.3C | 10 | 0.01C | No | 32.2 |
| Example 6 | 2C | 5 | 0 | 1 | 1.3C | 1 | 0.1C | No | 35.1 |
| Example 7 | 2C | 3 | 0.1C | 0.5 | 1.3C | 30 | 0.05C | No | 31.9 |

The lithium ion batteries of Examples 8 to 14 and Comparative examples 3 to 4 each has a cathode of LiCoO₂ and an anode of hard carbon. Each lithium ion battery also includes a separator, an electrolyte and a packaging case. Each lithium ion battery is prepared by assembling, forming and aging process. The cathode includes 96.7% of LiCoO₂ (as a cathode active material), 1.7% of PVDF (as a binder), and 1.6% of SP (as a conductive agent). The anode includes 98% of hard carbon (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 3150mAh (0.2C) and the cutoff voltage V₀ is 4.4V. At 25°C, the maximum charge current of the anode at which no lithium precipitation occurs is 2C, and the lowest anode potential of the anode at which no lithium precipitation occurs is -100mV.

Examples 8 to 14 and Comparative examples 3 to 4 each is charged at 25 °C. Examples 8 to 14 each use the method for charging a lithium ion battery of the present invention, and Comparative example 3 to 4 each use a conventional method for charging a lithium ion battery at a constant current and voltage. Table 2 presents the relevant parameters of each Examples and Comparative examples.

**Table 2 Comparison of charging parameters and charging effects of lithium ion batteries including LiCoO₂ and hard carbon**

| | **I₁** | **t₁(s)** | **I₂** | **t₂ (s)** | **I₀** | **t₃(s)** | **I₃** | **Whether lithium precipitation occurs at the anode** | **Charging time for reaching 80% SOC (min)** |
|---|---|---|---|---|---|---|---|---|---|
| Comparative example 3 | / | / | / | / | 2C | / | 0.05C | No | 31.8 |
| Comparative example 4 | / | / | / | / | 2.5C | / | 0.05C | Yes | 26.6 |
| Example 8 | 2.5C | 0.1 | 0.02C | 0.01 | 2C | 10 | 0.05C | No | 25.5 |
| Example 9 | 2.5C | 10 | 0.1C | 0.2 | 2C | 10 | 0.05C | No | 27.4 |
| Example 10 | 2.5C | 2 | 0.2C | 0.05 | 2C | 10 | 0.05C | No | 25.2 |
| Example 11 | 3C | 20 | 0.1C | 2 | 2C | 10 | 0.05C | No | 26.1 |
| Example 12 | 3C | 1 | 0.01C | 0.1 | 2C | 10 | 0.01C | No | 25.6 |
| Example 13 | 2.5C | 5 | 0 | 1 | 2C | 1 | 0.1C | No | 28.7 |
| Example 14 | 2.5C | 3 | 0.1C | 0.5 | 2C | 30 | 0.05C | No | 26.4 |

The lithium ion batteries of Examples 15 to 21 and Comparative examples 5 to 6 each includes a cathode of LiCoO₂ and an anode of mesophase carbon microbeads. Each lithium ion battery also includes a separator, an electrolyte and a packaging case. Each lithium ion battery is prepared by assembling, forming and aging process. The cathode includes 96.7% of LiCoO₂ (as a cathode active material), 1.7% of PVDF (as a binder), and 1.6% of SP (as a conductive agent). The anode includes 98% of MCMB (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 3250mAh (0.2C) and the cutoff voltage V₀ is 4.4V. At 25°C, the maximum charge current of the anode at which no lithium precipitation occurs is 1C, and the lowest anode potential of the anode at which no lithium precipitation occurs at the anode is -50mV.

Examples 15 to 21 and Comparative examples 5 to 6 each is charged at 25 °C. Examples 15 to 21 each use the method for charging a lithium ion battery of the present invention, and Comparative example 5 to 6 each use a conventional method for charging a lithium ion battery at a constant current and voltage. Table 3 presents the relevant parameters of each Examples and Comparative examples.

**Table 3 Comparison of charging parameters and charging effects of lithium ion batteries including LiCoO₂ and mesophase carbon microbeads in Examples and Comparative examples**

| | **I₁** | **t₁(s)** | **I₂** | **t₂ (s)** | **I₀** | **t₃ (s)** | **I₃** | **Whether lithium precipitation occurs at the anode** | **Charging time for reaching 80% SOC (min)** |
|---|---|---|---|---|---|---|---|---|---|
| Comparative example 5 | / | / | / | / | 1C | / | 0.05C | No | 48.1 |
| Comparative example 6 | / | / | / | / | 1.2C | / | 0.05C | Yes | 39.9 |
| Example 15 | 1.3C | 0.1 | 0.02C | 0.01 | 1C | 10 | 0.05C | No | 41.2 |
| Example 16 | 1.3C | 10 | 0.1C | 0.2 | 1C | 10 | 0.05C | No | 39.6 |
| Example 17 | 1.5C | 2 | 0.2C | 0.05 | 1C | 10 | 0.05C | No | 38.5 |
| Example 18 | 1.3C | 20 | 0.1C | 2 | 1C | 10 | 0.05C | No | 39.8 |
| Example 19 | 1.3C | 1 | 0.01C | 0.1 | 1C | 10 | 0.01C | No | 40.2 |
| Example 20 | 1.5C | 5 | 0 | 1 | 1C | 1 | 0.1C | No | 41.4 |
| Example 21 | 1.5C | 3 | 0.1C | 0.5 | 1C | 30 | 0.05C | No | 39.8 |

The lithium ion batteries of Examples 22 to 28 and Comparative examples 7 to 8 each includes a cathode of LiFePO₄ and an anode of graphite. Each lithium ion battery also includes a separator, an electrolyte and a packaging case. Each lithium ion battery is prepared by assembling, forming and aging process. The cathode includes 95.4% of LiFePO₄ (as a cathode active material), 2% of PVDF (as a binder), and 2.6% of SP (as a conductive agent). The anode includes 98% of artificial graphite (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 3200mAh (0.2C) and the cutoff voltage V₀ is 3.7V. At 25°C, the maximum charge current of the anode at which no lithium precipitation occurs at the anode is 0.7C, and the lowest anode potential of the anode at which no lithium precipitation occurs at the anode is -20mV.

Examples 22 to 28 and Comparative examples 7 to 8 each is charged at 25 °C. Examples 22 to 28 each use the method for charging a lithium ion battery of the present invention, and Comparative example 7 to 8 each use a conventional method for charging a lithium ion battery at a constant current and voltage. Table 4 presents the relevant parameters of each Examples and Comparative examples.

**Table 4 Comparison of charging parameters and charging effects of lithium ion batteries including LiFePO₄ and graphite in Examples and Comparative examples**

| | **I₁** | **t₁(s)** | **I₂** | **t₂ (s)** | **I₀** | **t₃(s)** | **I₃** | **Whether lithium precipitation occurs at the anode** | **Charging time for reaching 80% SOC (min)** |
|---|---|---|---|---|---|---|---|---|---|
| Comparative example 7 | / | / | / | / | 0.7C | / | 0.05C | No | 67.4 |
| Comparative example 8 | / | / | / | / | 1C | / | 0.05C | Yes | 48.2 |
| Example 22 | 1.1C | 0.1 | 0.02C | 0.01 | 0.7C | 10 | 0.05C | No | 49.3 |
| Example 23 | 1.3C | 10 | 0.1C | 0.2 | 0.7C | 10 | 0.05C | No | 47.2 |
| Example 24 | 1.1C | 2 | 0.2C | 0.05 | 0.7C | 10 | 0.05C | No | 49.6 |
| Example 25 | 1.3C | 20 | 0.1C | 2 | 0.7C | 10 | 0.05C | No | 48.5 |
| Example 26 | 1.3C | 1 | 0.01C | 0.1 | 0.7C | 10 | 0.01C | No | 46.9 |
| Example 27 | 1.1C | 5 | 0 | 1 | 0.7C | 1 | 0.1C | No | 49.9 |
| Example 28 | 1.3C | 3 | 0.1C | 0.5 | 0.7C | 30 | 0.05C | No | 47.3 |

The lithium ion batteries of Examples 29 to 35 and Comparative examples 9 to 10 each includes a cathode of LiFePO₄ and an anode of hard carbon. Each lithium ion battery also includes a separator, an electrolyte and a packaging case. Each lithium ion battery is prepared by assembling, forming and aging process. The cathode includes 95.4% of LiFePO₄ (as a cathode active material), 2% of PVDF (as a binder), and 2.6% of SP (as a conductive agent). The anode includes 98% of hard carbon (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 2800mAh (0.2C) and the cutoff voltage V₀ is 3.7V. At 25°C, the maximum charge current of the anode at which no lithium precipitation occurs at the anode is 1.2C and the lowest anode potential of the anode at which no lithium precipitation occurs at the anode is -20mV.

Examples 29 to 35 and Comparative examples 9 to 10 each is charged at 25 °C. Examples 29 to 35 each use the method for charging a lithium ion battery of the present invention, and Comparative example 9 to 10 each use a conventional method for charging a lithium ion battery at a constant current and voltage. Table 5 presents the relevant parameters of each Examples and Comparative examples.

**Table 5 Comparison of charging parameters and charging effects of lithium ion batteries including LiFePO₄ and hard carbon in examples and comparative examples**

| | **I₁** | **t₁(s)** | **I₂** | **t₂ (s)** | **I₀** | **t₃(s)** | **I₃** | **Whether lithium precipitation occurs at the anode** | **Charging time for reaching 80% SOC (min)** |
|---|---|---|---|---|---|---|---|---|---|
| Comparative example 9 | / | / | / | / | 1.2C | / | 0.05C | No | 40.1 |
| Comparative example 10 | / | / | / | / | 1.8C | / | 0.05C | Yes | 32.7 |
| Example 29 | 1.5C | 0.1 | 0.02C | 0.01 | 1.2C | 10 | 0.05C | No | 35.3 |
| Example 30 | 1.8C | 10 | 0.1C | 0.2 | 1.2C | 10 | 0.05C | No | 33.0 |
| Example 31 | 1.5C | 2 | 0.2C | 0.05 | 1.2C | 10 | 0.05C | No | 35.8 |
| Example 32 | 1.5C | 20 | 0.1C | 2 | 1.2C | 10 | 0.05C | No | 36.4 |
| Example 33 | 1.8C | 1 | 0.01C | 0.1 | 1.2C | 10 | 0.01C | No | 32.9 |
| Example 34 | 1.8C | 5 | 0 | 1 | 1.2C | 1 | 0.1C | No | 37.1 |
| Example 35 | 1.8C | 3 | 0.1C | 0.5 | 1.2C | 30 | 0.05C | No | 32.9 |

The lithium ion batteries of Examples 36 to 42 and Comparative examples 11 to 12 each includes a cathode of LiFePO₄ and an anode of MCMB. Each lithium ion battery also includes a separator, an electrolyte and a packaging case. Each lithium ion battery is prepared by assembling, forming and aging process. The cathode includes 95.4% of LiFePO₄ (as a cathode active material), 2% of PVDF (as a binder), and 2.6% of SP (as a conductive agent). The anode includes of 98% of MCMB (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 3000mAh (0.2C) and the cutoff voltage V₀ is 3.7V. The maximum charge current of the anode at which no lithium precipitation occurs at the anode is 0.5C and the lowest anode potential of the anode at which no lithium precipitation occurs at the anode is -20mV.

Examples 36 to 42 and Comparative examples 11 to 12 each is charged at 25 °C. Examples 36 to 42 each use the method for charging a lithium ion battery of the present invention, and Comparative example 11 to 12 each use a conventional method for charging a lithium ion battery at a constant current and voltage. Table 6 presents the relevant parameters of each Examples and Comparative examples.

**Table 6 Comparison of charging parameters and charging effects of lithium ion batteries including LiFePO₄ and MCMB in examples and comparative examples**

| | **I₁** | **t₁(s)** | **I₂** | **t₂ (s)** | **I₀** | **t₃ (s)** | **I₃** | **Whether lithium precipitation occurs at the anode** | **Charging time for reaching 80% SOC (min)** |
|---|---|---|---|---|---|---|---|---|---|
| Comparative example 11 | / | / | / | / | 0.5C | / | 0.05C | No | 96.2 |
| Comparative example 12 | / | / | / | / | 0.8C | / | 0.05C | Yes | 60.1 |
| Example 36 | 0.7C | 0.1 | 0.02C | 0.01 | 0.5C | 10 | 0.05C | No | 67.3 |
| Example 37 | 0.7C | 10 | 0.1C | 0.2 | 0.5C | 10 | 0.05C | No | 69.5 |
| Example 38 | 1C | 2 | 0.2C | 0.05 | 0.5C | 10 | 0.05C | No | 58.3 |
| Example 39 | 0.7C | 20 | 0.1C | 2 | 0.5C | 10 | 0.05C | No | 70.2 |
| Example 40 | 1C | 1 | 0.01C | 0.1 | 0.5C | 10 | 0.01C | No | 55.6 |
| Example 41 | 1C | 5 | 0 | 1 | 0.5C | 1 | 0.1C | No | 66.8 |
| Example 42 | 1C | 3 | 0.1C | 0.5 | 0.5C | 30 | 0.05C | No | 56.4 |

The lithium ion batteries of Examples 43 to 49 and Comparative examples 13 to 14 each includes a cathode of NCX(X=Mn, Al) and an anode of graphite. Each lithium ion battery also includes a separator, an electrolyte and a packaging case. Each lithium ion battery is prepared by assembling, forming and aging process. The cathode includes 96.4% of NCX (as a cathode active material), 1.8% of PVDF (as a binder), and 1.8% of SP (as a conductive agent). The anode includes 98% of graphite (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 3000mAh (0.2C) and the cutoff voltage V₀ is 4.2V. The maximum charge current of the anode at which no lithium precipitation occurs at the anode is 1C and the lowest anode potential of the anode at which no lithium precipitation occurs at the anode is -40mV.

Examples 43 to 49 and Comparative examples 13 to 14 each is charged at 25 °C. Examples 43 to 49 each use the method for charging a lithium ion battery of the present invention, and Comparative example 13 to 14 each use a conventional method for charging a lithium ion battery at a constant current and voltage. Table 7 presents the relevant parameters of each Examples and Comparative examples.

**Table 7 Comparison of charging parameters and charging effects of lithium ion batteries including NCX and graphite in Examples and Comparative examples**

| | **I₁** | **t₁(s)** | **I₂** | **t₂ (s)** | **I₀** | **t₃(s)** | **I₃** | **Whether lithium precipitation occurs at the anode** | **Charging time for reaching 80% SOC (min)** |
|---|---|---|---|---|---|---|---|---|---|
| Comparative example 13 | / | / | / | / | 1C | / | 0.05C | No | 48.2 |
| Comparative example 14 | / | / | / | / | 1.5C | / | 0.05C | Yes | 36.6 |
| Example 43 | 1.6C | 0.1 | 0.02C | 0.01 | 1C | 10 | 0.05C | No | 34.3 |
| Example 44 | 1.3C | 10 | 0.1C | 0.2 | 1C | 10 | 0.05C | No | 38.5 |
| Example 45 | 1.6C | 2 | 0.2C | 0.05 | 1C | 10 | 0.05C | No | 36.8 |
| Example 46 | 1.3C | 20 | 0.1C | 2 | 1C | 10 | 0.05C | No | 39.2 |
| Example 47 | 1.3C | 1 | 0.01C | 0.1 | 1C | 10 | 0.01C | No | 37.8 |
| Example 48 | 1.6C | 5 | 0 | 1 | 1C | 1 | 0.1C | No | 38.0 |
| Example 49 | 1.6C | 3 | 0.1C | 0.5 | 1C | 30 | 0.05C | No | 34.8 |

The lithium ion batteries of Examples 50 to 56 and Comparative examples 15 to 16 each includes a cathode of NCX(X=Mn, Al) and an anode of hard carbon. Each lithium ion battery also includes a separator, an electrolyte and a packaging case. Each lithium ion battery is prepared by assembling, forming and aging process. The cathode includes 96.4% of NCX (as a cathode active material), 1.8% of PVDF (as a binder), and 1.8% of SP (as a conductive agent). The anode includes 98% of graphite (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 2900mAh (0.2C) and the cutoff voltage V₀ is 4.2V. The maximum charge current of the anode at which no lithium precipitation occurs at the anode is 1.5C and the lowest anode potential of the anode at which no lithium precipitation occurs at the anode is -60mV.

Examples 50 to 56 and Comparative examples 15 to 16 each is charged at 25 °C. Examples 50 to 56 each use the method for charging a lithium ion battery of the present invention, and Comparative example 15 to 16 each use a conventional method for charging a lithium ion battery at a constant current and voltage. Table 8 presents the relevant parameters of each Examples and Comparative examples.

**Table 8 Comparison of charging parameters and charging effects of lithium ion batteries including NCX and hard carbon in examples and comparative examples**

| | **I₁** | **t₁(s)** | **I₂** | **t₂ (s)** | **I₀** | **t₃(s)** | **I₃** | **Whether lithium precipitation occurs at the anode** | **Charging time for reaching 80% SOC (min)** |
|---|---|---|---|---|---|---|---|---|---|
| Comparative example 15 | / | / | / | / | 1.5C | / | 0.05C | No | 36.5 |
| Comparative example 16 | / | / | / | / | 2C | / | 0.05C | Yes | 31.6 |
| Example 50 | 1.8C | 0.1 | 0.02C | 0.01 | 1.5C | 10 | 0.05C | No | 32.8 |
| Example 51 | 1.8C | 10 | 0.1C | 0.2 | 1.5C | 10 | 0.05C | No | 33.5 |
| Example 52 | 2.2C | 2 | 0.2C | 0.05 | 1.5C | 10 | 0.05C | No | 30.6 |
| Example 53 | 1.8C | 20 | 0.1C | 2 | 1.5C | 10 | 0.05C | No | 33.0 |
| Example 54 | 1.8C | 1 | 0.01C | 0.1 | 1.5C | 10 | 0.01C | No | 32.5 |
| Example 55 | 2.2C | 5 | 0 | 1 | 1.5C | 1 | 0.1C | No | 33.9 |
| Example 56 | 2.2C | 3 | 0.1C | 0.5 | 1.5C | 30 | 0.05C | No | 30.5 |

The lithium ion batteries of Examples 57 to 63 and Comparative examples 17 to 18 each includes a cathode of NCX(X=Mn, Al) and an anode of MCMB. Each lithium ion battery also includes a separator, an electrolyte and a packaging case. Each lithium ion battery is prepared by assembling, forming and aging process. The cathode includes 96.4% of NCX (as a cathode active material), 1.8% of PVDF (as a binder), and 1.8% of SP (as a conductive agent). The anode includes 98% of MCMB (as anode active material), 1.0% of SBR (as binder), and 1.0% of CMC (as thickener). The separator is a composite film of PP/PE/PP. The electrolyte includes organic solvent (30% EC + 30% PC + 40% DEC), 1 mol/L LiPF₆ and additives (0.5% VC, 5% FEC, 4% VEC).

At 25°C, the full charge capacity (SOC) of the lithium ion battery is 2950mAh (0.2C) and the cutoff voltage V₀ is 4.2V. At 25°C, the maximum charge current of the anode at which no lithium precipitation occurs at the anode is 0.8C and the lowest anode potential of the anode at which no lithium precipitation occurs at the anode is -30mV.

Examples 57 to 63 and Comparative examples 17 to 18 each is charged at 25 °C. Examples 57 to 63 each use the method for charging a lithium ion battery of the present invention, and Comparative example 17 to 18 each use a conventional method for charging a lithium ion battery at a constant current and voltage. Table 9 presents the relevant parameters of each examples and comparative examples.

**Table 9 Comparison of charging parameters and charging effects of lithium ion batteries including NCX and MCMB in examples and comparative examples**

| | **I₁** | **t₁(s)** | **I₂** | **t₂ (s)** | **I₀** | **t₃(s)** | **I₃** | **Whether lithium precipitation occurs at the anode** | **Charging time for reaching 80% SOC (min)** |
|---|---|---|---|---|---|---|---|---|---|
| Comparative example 17 | / | / | / | / | 0.8C | / | 0.05C | No | 60.1 |
| Comparative example 18 | / | / | / | / | 1.2C | / | 0.05C | Yes | 40.3 |
| Example 57 | 1.5C | 0.1 | 0.02C | 0.01 | 0.8 C | 10 | 0.05C | No | 38.2 |
| Example 58 | 1C | 10 | 0.1C | 0.2 | 0.8C | 10 | 0.05C | No | 48.8 |
| Example 59 | 1.5C | 2 | 0.2C | 0.05 | 0.8C | 10 | 0.05C | No | 38.5 |
| Example 60 | 1C | 20 | 0.1C | 2 | 0.8C | 10 | 0.05C | No | 49.7 |
| Example 61 | 1.5C | 1 | 0.01C | 0.1 | 0.8C | 10 | 0.01C | No | 37.4 |
| Example 62 | 1.5C | 5 | 0 | 1 | 0.8C | 1 | 0.1C | No | 45.8 |
| Example 63 | 1.5C | 3 | 0.1C | 0.5 | 0.8C | 30 | 0.05C | No | 38.2 |

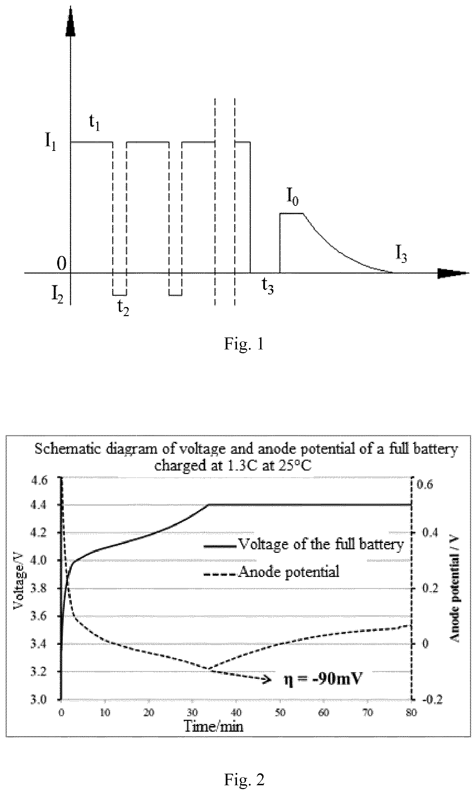

Fig. 2 depicts a schematic diagram of voltage and anode potential of a full battery according to Example 1 of the present invention including LiCoO₂ and graphite charged at 1.3C. Referring to Fig. 2, the lowest anode potential η of the lithium ion battery at which no lithium precipitation occurs at the anode is about -90mV. Tables 1 to 9 present the lithium precipitation and charging time for reaching 80% SOC in different examples and comparative examples. As can be seen, for a lithium ion battery charged at constant current and voltage according to the traditional method, if the charging current exceeds the maximum safe charging current the battery system can bear, lithium precipitation occurs at the anode. If the lithium ion battery is charged according to the method for charging a lithium ion battery of the present invention, lithium precipitation at the anode of the lithium ion battery can be effectively inhibited, so as to enhance the maximum safe charging current the lithium ion battery can bear. Accordingly, the method for charging a lithium ion battery of the present invention can increase the charging speed.

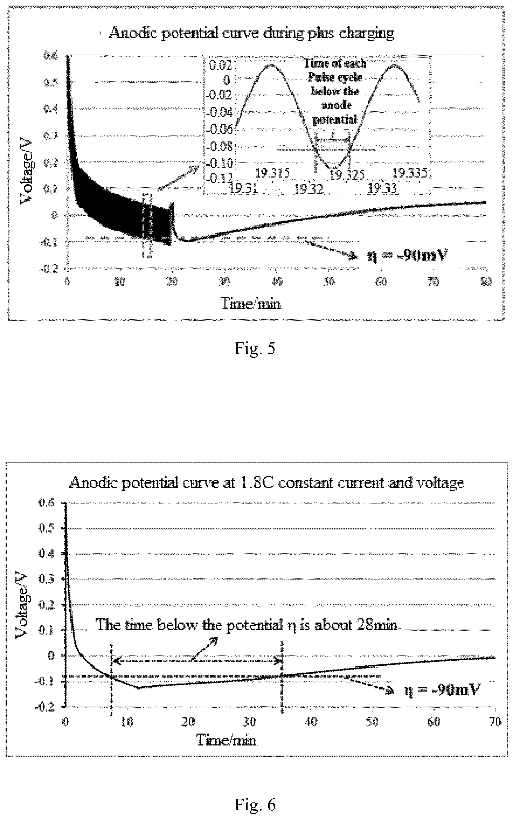

The improvement of the method for charging a lithium ion battery of the present invention can be explained in view of the anode potential of the charging process. Fig. 5 and Fig. 6 depict anodic potential curves of Example 1 and Comparative example 2 respectively. As can be seen from Figs. 5 and 6, for a lithium ion battery charged at 1.8C with a constant current and voltage, the time in which no lithium precipitation occurs below the lowest anode potential is about 28 min. At one hand, for a lithium ion battery charged according to the method for charging a lithium ion battery of the present invention, the time in which no lithium precipitation occurs below the lowest anode potential is remarkably shortened (about 0.5 min). At the other hand, in the method for charging a lithium ion battery of the present invention, the lithium ion battery is charged with a large current pulse and discharged with a small current pulse. Therefore, increase of the lithium ion concentration at the surface of the anode caused by the large current charging is reduced and occurrence of lithium precipitation at the anode is avoided.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions describe example embodiments, it should be appreciated that alternative embodiments without departing from the scope of the appended claims. Although specific terms are employed herein, they are used in a generic and descriptive sense only and not for purposes of limitation.

## Claims

1. A method for charging a lithium ion battery, comprising the steps of:
1) determining a maximum charging current I₀ and a lowest anode potential η of the lithium ion battery at which no lithium precipitation occurs;
2) charging the lithium ion battery at a constant current of I₁ which is greater than I₀ for a charging time of t₁;
3) discharging the lithium ion battery at a constant current of I₂ which is less than I₀ for a discharging time of t₂, wherein 5≤t₁/t₂≤50;
4) repeating steps 2) and 3) until a cutoff voltage of the lithium ion battery reaches Vo, and then standing the lithium ion battery for a standing time of t₃; and
5) charging the lithium ion battery with a constant current of I₀ until the cutoff voltage of the lithium ion battery reaches V₀ and then charging the lithium ion battery to a cutoff current of I₃ at a constant voltage.

2. The method for charging a lithium ion battery of claim 1, wherein in step 2), a current value of the constant current I₁ is 0.7C to 3C and the charging time t₁ is 0.1s to 20s.

3. The method for charging a lithium ion battery of claim 1, wherein in step 3), a current value of the constant current I₂ is 0 to 0.2C and the discharging time t₂ is 0.01s to 2s.

4. The method for charging a lithium ion battery of claim 1, wherein in step 4), the standing time t₃ is 1s to 10s.

5. The method for charging a lithium ion battery of claim 1, wherein in step 5), a current value of the constant current I₃ is 0.01C to 0.1C.

6. The method for charging a lithium ion battery of claim 1, wherein the cutoff voltage V₀ satisfies 3.6V≤V₀<4.5V.

7. The method for charging a lithium ion battery of claim 1, wherein a cathode of the lithium ion battery is selected from a group consisting of LiCoO₂, LiFePO₄, LiNiCoMnₓAl₁₋ₓO₂, wherein 0≤x≤1; an anode of the lithium ion battery is selected from a group consisting of graphite, hard carbon, mesophase carbon microbeads; a maximum charge current I₀ of the anode at which no lithium precipitation occurs at the anode is 0.5C to 2.0C; and a lowest anode potential η at which no lithium precipitation occurs at the anode is -5mV to -100mV.

8. The method for charging a lithium ion battery of claim 1, wherein the method is carried out at a temperature of 25±3 °C.

## Patentansprüche

1. Verfahren zum Laden einer Lithiumionen-Batterie, umfassend die Schritte:
1) Bestimmen eines maximalen Ladestroms I₀ und eines niedrigsten Anodenpotenzials η der Lithiumionen-Batterie, an welchem keine Lithiumausfällung stattfindet,
2) Laden der Lithiumionen-Batterie bei einem konstanten Strom I₁, der größer ist als I₀, für eine Ladezeit t₁,
3) Entladen der Lithiumionen-Batterie bei einem konstanten Strom I₂, der geringer ist als I₀, für eine Entladungszeit t₂, wobei 5 ≤ t₁/t₂ ≤ 50,
4) Wiederholen der Schritte 2) und 3), bis eine Grenzspannung der Lithiumionen-Batterie V₀ erreicht, und dann Stehen der Lithiumionen-Batterie für eine Standzeit t₃, und
5) Laden der Lithiumionen-Batterie mit einem konstanten Strom I₀, bis die Grenzspannung der Lithiumionen-Batterie V₀ erreicht, und dann Laden der Lithiumionen-Batterie auf einen Grenzstrom I₃ bei einer konstanten Spannung.

2. Verfahren zum Laden einer Lithiumionen-Batterie nach Anspruch 1, wobei in Schritt 2) ein Stromwert des konstanten Stroms I₁ 0,7 C bis 3 C beträgt und die Ladezeit t₁ 0,1 s bis 20 s ist.

3. Verfahren zum Laden einer Lithiumionen-Batterie nach Anspruch 1, wobei in Schritt 3) ein Stromwert des konstanten Stroms I₂ 0 bis 0,2 C beträgt und die Entladungszeit t₂ 0,01 s bis 2 s ist.

4. Verfahren zum Laden einer Lithiumionen-Batterie nach Anspruch 1, wobei in Schritt 4) die Standzeit t₃ 1 s bis 10 s ist.

5. Verfahren zum Laden einer Lithiumionen-Batterie nach Anspruch 1, wobei in Schritt 5) ein Stromwert des konstanten Stroms I₃ 0,01 C bis 0,1 C beträgt.

6. Verfahren zum Laden einer Lithiumionen-Batterie nach Anspruch 1, wobei die Grenzspannung V₀ 3,6 V ≤ V₀ < 4,5 V erfüllt.

7. Verfahren zum Laden einer Lithiumionen-Batterie nach Anspruch 1, wobei eine Kathode der Lithiumionen-Batterie ausgewählt ist aus der Gruppe, bestehend aus LiCoO₂, LiFePO₄, LiNiCoMnₓAl₁₋ₓO₂, wobei 0 ≤ x ≤ 1, eine Anode der Lithiumionen-Batterie ausgewählt ist aus der Gruppe, bestehend aus Graphit, Hartkohlenstoff, Mesophasen-Kohlenstoff-Mikrokügelchen, ein maximaler Ladestrom I₀ der Anode, bei dem keine Lithiumausfällung an der Anode stattfindet, bei 0,5 C bis 2,0 C liegt und das niedrigste Anodenpotenzial η, an welchem keine Lithiumausfällung an der Anode stattfindet, -5 mV bis -100 mV beträgt.

8. Verfahren zum Laden einer Lithiumionen-Batterie nach Anspruch 1, wobei das Verfahren bei einer Temperatur von 25 ± 3 °C ausgeführt wird.

## Revendications

1. Procédé de chargement d'une batterie lithium ion, comprenant les étapes de :
1) détermination d'un courant de chargement maximum I₀ et d'un potentiel d'anode le plus bas η de la batterie lithium ion auquel il ne se produit pas de précipitation de lithium ;
2) chargement de la batterie lithium ion à un courant constant de I₁ qui est supérieur à I₀ pendant un temps de chargement de t₁ ;
3) déchargement de la batterie lithium ion à un courant constant de I₂ qui est inférieur à I₀ pendant un temps de déchargement de t₂, où 5≤t₁/t₂≤50 ;
4) répétition des étapes 2) et 3) jusqu'à ce qu'une tension de coupure de la batterie lithium ion atteigne V₀, et ensuite mise au repos de la batterie lithium ion pendant un temps de repos de t₃ ; et
5) chargement de la batterie lithium ion avec un courant constant de I₀ jusqu'à ce que la tension de coupure de la batterie lithium ion atteigne V₀ et ensuite chargement de la batterie lithium ion jusqu'à un courant de coupure de I₃ à une tension constante.

2. Procédé de chargement d'une batterie lithium ion selon la revendication 1, dans lequel à l'étape 2), une valeur de courant du courant constant I₁ est de 0,7 C à 3 C et le temps de chargement t₁ est de 0,1 s à 20 s.

3. Procédé de chargement d'une batterie lithium ion selon la revendication 1, dans lequel à l'étape 3), une valeur de courant du courant constant I₂ est de 0 à 0,2 C et le temps de déchargement t₂ est de 0,01 s à 2 s.

4. Procédé de chargement d'une batterie lithium ion selon la revendication 1, dans lequel à l'étape 4), le temps de repos t₃ est 1 s à 10 s.

5. Procédé de chargement d'une batterie lithium ion selon la revendication 1, dans lequel à l'étape 5), une valeur de courant du courant constant I₃ est de 0,01 C à 0,1 C.

6. Procédé de chargement d'une batterie lithium ion selon la revendication 1, dans lequel la tension de coupure V₀ satisfait 3,6 V≤V₀<4,5 V.

7. Procédé de chargement d'une batterie lithium ion selon la revendication 1, dans lequel une cathode de la batterie lithium ion est sélectionnée dans un groupe constitué de LiCoO₂, LiFePO₄, LiNiCoMnₓAl₁₋ₓO₂, où 0≤x≤1 ; une anode de la batterie lithium ion est sélectionnée dans un groupe constitué de graphite, carbone dur, micro-perles de carbone mésophase ; un courant de charge maximum I₀ de l'anode auquel il ne se produit pas de précipitation de lithium au niveau de l'anode est de 0,5 C à 2,0 C ; et un potentiel d'anode le plus bas η auquel il ne se produit pas de précipitation de lithium au niveau de l'anode est de -5 mV à -100 mV.

8. Procédé de chargement d'une batterie lithium ion selon la revendication 1, dans lequel le procédé est exécuté à une température de 25±3° C.
